**Europäisches Patentamt**

**European Patent Office**

**Office européen des brevets**

(11) Veröffentlichungsnummer : **0 137 943**
**B1**

(19)

(12) **EUROPÄISCHE PATENTSCHRIFT**

(45) Veröffentlichungstag der Patentschrift :
02.11.89

(51) Int. Cl.⁴ : **H 04 B 7/26, H 04 M 1/72**

(21) Anmeldenummer : 84109333.9

(22) Anmeldetag : 07.08.84

(54) Funknetz zum Übertragen von Informationen zwischen jeweils einem Paar von mehreren Funkstationspaaren.

(30) Priorität : 14.10.83 DE 3337358

(43) Veröffentlichungstag der Anmeldung :
24.04.85 Patentblatt 85/17

(45) Bekanntmachung des Hinweises auf die Patenterteilung : 02.11.89 Patentblatt 89/44

(84) Benannte Vertragsstaaten :
AT CH DE FR LI NL SE

(56) Entgegenhaltungen :
EP--A-- 0 074 940
DE--A-- 3 302 849
PATENT ABSTRACTS OF JAPAN, unexamined applications, Sektion E, Vol. 1, Nr. 143, 22. November 1977,
THE PATENT OFFICE JAPANESE GOVERNMENT,
Seite 7135, E 77
PATENT ABSTRACTS OF JAPAN, unexamined applications, Sektion E, Vol. 2, Nr. 99, 17. August 1978, THE
PATENT OFFICE JAPANESE GOVERNMENT, Seite
4877 E 78

(73) Patentinhaber : ROBERT BOSCH GMBH
Postfach 50
D-7000 Stuttgart 1 (DE)

(72) Erfinder : Blanschefski, Michael, Dipl.-Ing.
Prinzenallee 7
D-1000 Berlin 65 (DE)
Erfinder : Löscher, Günther, Dipl.-Ing.
Krontalstrasse 82
D-1000 Berlin 49 (DE)

(74) Vertreter : Schmidt, Hans-Ekhardt
Robert Bosch GmbH Geschäftsbereich Elektronik
Patent- und Lizenzabteilung Forckenbeckstrasse 9-
13
D-1000 Berlin 33 (DE)

# Beschreibung

## Stand der Technik

Die Erfindung geht von einem Funknetz nach der im Oberbegriff des Anspruchs 1 angegebenen Gattung aus.

Es sind Funknetze bekannt (DE-A-33 01 778, EP-A-74 940), bei denen ein Paar von Funksende- und -empfangsgeräten — im folgenden Funkstationspaar genannt — aus einer ortsfesten Funkstation und einer nicht ortsgebundenen Funkstation besteht. Die ortsfeste Funkstation ist mit dem Fernsprechnetz verbunden, und die nicht ortsgebundene Funkstation ist vorzugsweise als in der Hand zu haltende Station ausgebildet. Derartige Funknetze sind unter der Bezeichnung « schnurloses Telefon » bekannt. Jeweils eine Funkstation eines Funkgerätepaares kann über einen freien Funkkanal der insgesamt n Funkkanäle des Funknetzes mit der anderen Funkstation desselben Funkstationspaares in Verbindung treten, um Informationen in beiden Richtungen zu übertragen. Nach einem von der Deutschen Bundespost geplanten Funknetz suchen die Empfangsteile der Funkstationen eines Funkstationspaares zunächst einen freien Funkkanal und senden dann auf diesem einen durch einen individuellen Sicherungskode gekennzeichneten Hochfrequenzträger aus. Die Empfangsteile der Funkstationen sprechen nur auf den Sicherungskode des eigenen Funkstationspaares an. Damit wird gewährleistet, daß die zwischen einem Funkstationspaar zu übertragenden Informationen von keinem anderen Funkstationspaar abgehört werden können. Die Empfangsteile müssen also alle n verfügbaren Funkkanäle des Funknetzes laufend und sich zyklisch wiederholend abtasten, um zu prüfen, ob auf einem Funkkanal ein mit dem für sie bestimmten individuellen Sicherungskode modulierter Hochfrequenzträger vorhanden ist, damit sie sich auf diesen Funkkanal synchronisieren können. Bei dem von der Deutschen Bundespost geplanten Funknetz sind n = 40 Funkkanäle vorgesehen, womit das Funknetz an sich überdimensioniert sein wird, weil die Funkdichte in der Bundesrepublik Deutschland zunächst noch gering sein wird und weil die Reichweite für die Informationsübertragung zwischen einem Funkstationspaar auf maximal 100 m begrenzt ist. Wegen der großzügigen Dimensionierung des Funknetzes setzt somit das laufende Abtasten der Funkkanäle nach einem für die betreffende Funkstation bestimmten Anruf bzw. nach einem freien Funkkanal ein dauerndes Eingeschaltetsein der Kanalsteuerungen und der Empfangsteile voraus, wodurch unnötig viel Strom verbraucht wird. Hinzu kommt noch, daß zum Beispiel, wenn eine nicht ortsgebundene Funkstation auf dem ersten freien Funkkanal der n Funkkanäle senden will und die ortsfeste Funkstation gerade den zweiten Funkkanal abtastet, erst ein vollständiger Abtastzyklus vergeht, bevor die ortsfeste Funkstation den für sie bestimmten Anruf erkennen kann.

Der Stromverbrauch bei den nicht ortsgebundenen Funkstationen muß einerseits niedrig gehalten werden, weil diese Stationen aus wiederaufladbaren Stromquellen betrieben werden, deren Kapazität aus Gewichtsgründen begrenzt ist, und andererseits ist ein schneller Verbindungsaufbau erwünscht, um unnötige Wartezeiten für die Teilnehmer zu vermeiden.

Es ist weiterhin ein drahtloser Telefonapparat bekannt (EP-A1-0 074 940), der auch als schnurloses Telefon bezeichnet werden kann. Der mobile Teil des Telefons prüft ständig alle insgesamt verfügbaren Funkkanäle auf ihren Belegungszustand. Besteht ein Gesprächswunsch, so schaltet sich der Teil auf einen freien Kanal, und der Sender strahlt ein bestimmtes Kodesignal aus. Der Empfänger des stationären Teils des schnurlosen Telefons erfaßt ständig alle belegten Kanäle und trifft beim Prüfen auf den Kanal des mobilen Teils. Nur wenn der stationäre Teil den bestimmten Kode erkennt und wenn der stationäre Teil anschließend einen Quittungskode aussendet, den der mobile Teil erkennt, kann ein Gesprächsaufbau beginnen.

Es ist außerdem ein Selektivruf-Funksystem bekannt (JP-A-52-80703), bei dem zwecks Stromersparnis die Empfänger der Funkteilnehmer in starre Gruppen eingeteilt werden, die in einem festen Zeitrahmen untergebracht sind. Bei diesem System wird jeder Empfänger nur innerhalb eines bestimmten Zeitschlitzes auf Empfang geschaltet. In den Zeiten zwischen den Zeitschlitzen wird somit Strom gespart. Über die Zahl der Frequenzkanäle und über eine eventuelle bessere Ausnutzung der Kanäle sagt die zuletzt genannte Druckschrift nichts aus.

## Vorteile der Erfindung

Das erfindungsgemäße Funknetz mit den kennzeichnenden Merkmalen des Anspruchs 1 hat den Vorteil, daß die nicht ortsgebundenen Funkstationen des Funknetzes mit weniger Strom auskommen, wodurch bei den nicht ortsgebundenen Funkstationen die Ladeintervalle für die wiederaufladbaren Stromquellen erheblich verlängert oder das Gewicht und die Abmessungen der Stromquellen verringert werden können. Zusätzlich kommt der Verbindungsaufbau schneller zustande, da nicht die vollständige Anzahl der verfügbaren Kanäle geprüft werden muß.

## Zeichnung

Ein Ausführungsbeispiel der Erfindung ist in der Zeichnung anhand zweier Figuren dargestellt und in der nachfolgenden Beschreibung näher erläutert. Die Zeichnung zeigt in

Fig. 1 ein Zeitschema der erfindungsgemäßen Prüf- und Pausenzeiten und

Fig. 2 ein Blockschaltbild eines erfindungsgemäßen Funkstationspaares.

Beschreibung der Erfindung

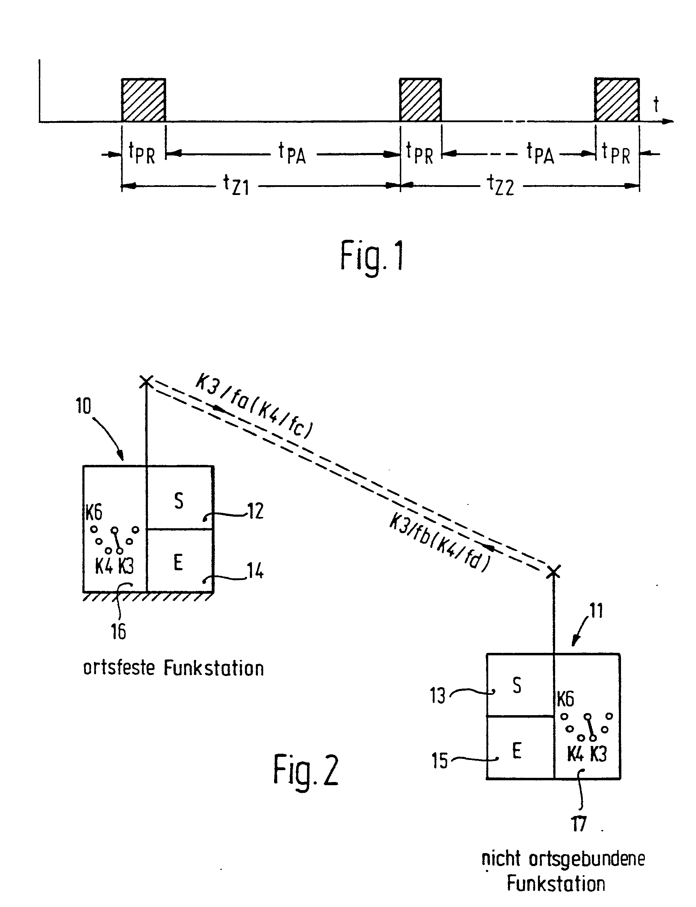

In einem erfindungsgemäßen Funknetz mit mehreren Funkstationspaaren aus je einer ortsfesten Funkstation 10 (Fig. 2) und einer nicht ortsgebundenen Funkstation 11 vereinbaren und speichern die Funkstationen eines jeden Stationspaares aus n verfügbaren Funkkanälen des Funknetzes mindestens vor der ersten Inbetriebnahme $n_1$ freie Funkkanäle, wobei $n_1$ eine Zahl ist, die wesentlich kleiner als n ist.

Anschließend erfolgt die Kanalprüfung bei jedem Funkstationspaar nur noch auf den $n_1$ gespeicherten Funkkanälen, und zwar derart, daß die ortsfeste Funkstation die $n_1$ Funkkanäle fortlaufend prüft, während die nicht ortsgebundene Funkstation die Prüfung der $n_1$ Funkkanäle nur in bestimmten vorgegebenen Zeitintervallen vornimmt ; vgl. Fig. 1.

Sind $n_1 - 1$ Funkkanäle belegt, so wird eine neue Vereinbarung getroffen. In der Regel dürften $n_1 = 2$ Funkkanäle für den Informationsaustausch zwischen den Funkstationen eines Funkstationspaares ausreichen. Dieselben $n_1$ Funkkanäle können in einem gewissen räumlichen Abstand von diesem Funkstationspaar für ein anderes Funkstationspaar vereinbart werden.

Die Prüfung bei der nicht ortsgebundenen Funkstation auf einen belegten Funkkanal erfolgt also nicht wie bei bekannten Funknetzen für die gesamte Zykluszeit $t_{Z1}$, $t_{Z2}$, die für das Prüfen von n Funkkanälen erforderlich wäre, sondern nur für eine Zeit $t_{PR}$, die erforderlich ist, um die vereinbarte Zahl von $n_1$ Funkkanälen zu prüfen. Während zum Beispiel die Prüfdauer (= Zyklusdauer $t_Z$) für das Prüfen von n = 40 Funkkanälen 3 000 ms beträgt, können $n_1 = 2$ Funkkanäle schon in einer Prüfzeit $t_{PR} \sim 150$ ms geprüft werden. In der restlichen Zeit (= Pausenzeit $t_{PA}$) der Zykluszeit $t_{Z1}$, $t_{Z2}$ ... werden die Empfangsteile der im übrigen betriebsbereiten nicht ortsgebundenen Funkstationen ausgeschaltet. Das in Fig. 1 gezeigte Beispiel läßt deutlich erkennen, daß das Verhältnis von Pausenzeit $t_{PA}$ zur Prüfzeit $t_{PR}$ sehr groß ist. Die Empfangsteile sind somit für den größten Teil der Zeit abgeschaltet und nur kurzzeitig zum Prüfen der vereinbarten Funkkanäle auf ihren Belegungszustand bzw. im Belegungsfall auf ihren individuellen Sicherungskode eingeschaltet. Die maximale Pausenzeit $t_{PA}$ richtet sich nach der für das Funknetz festgelegten maximalen Zeit für den Verbindungsaufbau. Der Prüf-Pausen-Zyklus bleibt bestehen, bis eine der beiden Funkstationen entweder auf den Sendebetrieb umschaltet, um die andere Funkstation zu rufen, oder bis eine Funkstation einen belegten Funkkanal feststellt. Erkennt die Funkstation auf dem belegten Funkkanal den eigenen Sicherungskode, so wird automatisch die HF-Verbindung mit der rufenden Funkstation hergestellt.

In Fig. 2 ist als Beispiel für einen Verbindungsaufbau gezeigt, daß beide Funkstationen 10, 11 auf den Kanal K3 geschaltet sind, wobei ein Sendeteil 12 der ortsfesten Funkstation 10 auf einer dem Kanal K3 zugeordneten Trägerfrequenz $f_a$ sendet, während das Sendeteil 13 der nicht ortsgebundenen Funkstation 11 auf einer ebenfalls dem Kanal K3 zugeordneten Trägerfrequenz $f_b$ sendet. Dementsprechend ist ein Empfangsteil 14 der ortsfesten Funkstation 10 auf die Trägerfrequenz $f_b$ abgestimmt, während das Empfangsteil 15 der nicht ortsgebundenen Funkstation 11 auf die Trägerfrequenz $f_a$ abgestimmt ist.

Sind zum Beispiel zwei von n Funkkanälen gespeichert (Kanal K3, K4), prüft der Empfänger der ortsfesten Funkstation laufend Kanal K3 und Kanal K4 und der Empfänger der nicht ortsgebundenen Funkstation zu den Prüfzeiten $t_{PR}$ die Kanäle K3 und K4 nacheinander. Ist einer der gespeicherten Kanäle durch ein fremdes Funkstationspaar belegt, wird sofort der andere gespeicherte Kanal als Organisationskanal derart benutzt, daß über diesen ein Befehl zur neuen Kanalvereinbarung zur Gegenstation übermittelt wird.

Das Vereinbaren der für ein Funkstationspaar geltenden Funkkanäle erfolgt vorzugsweise automatisch durch elektronische Mittel, die aus der elektronischen Nachrichtenvermittlungstechnik bekannt sind.

## Patentansprüche

1. Funknetz zum Übertragen von Informationen zwischen jeweils einem Paar von mehreren Funkstationspaaren über einen Funkkanal von n im Frequenzmultiplex betriebenen Funkkanälen, wobei die Sendeteile eines jeden Funkstationspaares Mittel enthalten, die vor einer Übertragung einen individuellen Sicherungskode aussenden, und die Empfangsteile der Funkstationen Mittel enthalten, die nur auf diesen Sicherungskode ansprechen, dadurch gekennzeichnet, daß die Funkstationen (10, 11) jedes Funkstationspaares so ausgestaltet sind, daß sie mindestens vor der ersten Inbetriebnahme $n_1 < n$ freie Funkkanäle (K1 ...) vereinbaren und speichern, daß mindestens eine Station eines jeden Funkstationspaares so ausgestaltet ist, daß das Empfangsteil (15) nur für bestimmte, durch gleichlange Pausenzeiten ($t_{PA}$) unterbrochene Prüfzeiten ($t_{PR}$) zum Prüfen der $n_1$ Funkkanäle auf ihren Belegungszustand eingeschaltet wird und daß die Pausenzeiten ein Vielfaches der Prüfzeiten betragen.

2. Funknetz nach Anspruch 1, dadurch gekennzeichnet, daß von den gespeicherten Funkkanälen (K3, K4) eines jeden Funkstationspaares bei Belegung eines Funkkanals (K3) durch fremde Funkstationen der verbleibende Funkkanal (K4) als Organisationskanal dient, über den ein neuer Funkkanal (K6) vereinbart wird, der in beiden Funkstationen gespeichert wird.

3. Funknetz nach Anspruch 1 oder 2, dadurch gekennzeichnet, daß das Suchen, Vereinbaren und Speichern der freien Funkkanäle automatisch vorgenommen wird.

## Claims

1. A radio network for the transmission of information between a respective pair of several pairs of radio stations by way of a radio channel of n radio channels operated in frequency multiplex, wherein the transmitting sections of each pair of radio stations include means which transmit an individual security code before a transmission, and the receiving sections of the radio stations include means which only respond to this security code, characterised in that the radio stations (10, 11) of each pair of radio stations are designed in such a way that they stipulate and store $n_1 < n$ free radio channels (K1 ...) at least before the first time they are put into operation, that at least one station of each pair of radio stations is designed in such a way that the receiving section (15) is only switched on for predetermined testing times ($t_{PR}$) interrupted by interval times ($t_{PA}$) of equal length for the purpose of testing the $n_1$ radio stations for their occupied state, and that the interval times are a multiple of the testing times.

2. A radio network as claimed in claim 1, characterised in that when a radio channel (K3) of the stored radio channels (K3, K4) of each pair of radio stations is occupied by external radio stations, the remaining radio channel (K4) serves as an organisational channel by which a fresh radio channel (K6) is stipulated, and the fresh radio channel (6) is stored in the two radio stations.

3. A radio network as claimed in claim 1 or 2, characterised in that the searching, stipulation and storing of the free radio channels are effected automatically.

## Revendications

1. Réseau radio pour transmettre des informations chaque fois entre une paire de plusieurs paires de station radio par un canal choisi entre plusieurs canaux fonctionnant par fréquence multiplex, les parties d'émetteur d'une quelconque paire de station radio comprenant un moyen qui, avant une transmission envoie un code particulier de sécurité, et les parties réceptrices des stations de radio comprennent des moyens qui ne répondent qu'à ce code de sécurité, caractérisé en ce que les stations de radio (10, 11) de chaque paire de stations radio sont constituées de telle façon, qu'avant la première mise en service $n_1 < n$, des canaux libres (K1 ...) sont susceptibles d'être associés et enregistrés, qu'au moins une station dans chaque paire de station est constituée de telle façon que chaque partie réceptrice (15) est mise en circuit par des temps d'essai déterminés ($t_{PR}$) interrompus par des pauses ($t_{PA}$) de même durée pour tester les $n_1$ canaux hertziens du point de vue occupation et que les pauses représentent un multiple des temps d'essai.

2. Réseau radio selon la revendication 1, caractérisé en ce que à partir des canaux mis en mémoire (K3, K4) de chaque paire de station radio, par occupation d'un canal (K3) par des stations de radio étrangères, le canal radio restant (K4) sert de canal d'organisation, grâce auquel un nouveau canal radio (K6) est susceptible d'être associé, qui est enregistré dans les deux stations radio.

3. Réseau radio selon la revendication 1 ou la revendication 2, caractérisé en ce que la recherche, l'association et la mise en mémoire des canaux radio libres est entreprise automatiquement.

Fig.1

Fig.2

ortsfeste Funkstation

nicht ortsgebundene
Funkstation